# EUROPÄISCHE PATENTSCHRIFT

(11) **EP 3 999 599 B1**
(45) Veröffentlichungstag und Bekanntmachung des Hinweises auf die Patenterteilung: **14.06.2023**
(21) Anmeldenummer: 20740563.0
(22) Anmeldetag: 09.07.2020
(51) Int. Cl.: C09D 7/45, C09C 3/10, C09B 67/20, C09B 67/46, C09C 1/56, C09D 11/037, C09D 11/322

(54) **WÄSSRIGE PIGMENTPRÄPARATIONEN SOWIE DEREN VERWENDUNG FÜR ABTÖNSYSTEME UND ZUR EINFÄRBUNG VON BESCHICHTUNGSSTOFFEN**
AQUEOUS PIGMENT PREPARATIONS AND THEIR USE IN TINTING SYSTEMS AND FOR DYEING COATING AGENTS
PRÉPARATIONS AQUEUSES DE PIGMENT AINSI QUE LEUR UTILISATION POUR DES SYSTÈMES DE NUANCAGE ET POUR LA COLORATION DE MATIÈRES DE REVÊTEMENT

(30) Priorität: 16.07.2019 DE 102019210457
(43) Veröffentlichungstag der Anmeldung: 25.05.2022
(73) Patentinhaber: Clariant International Ltd, 4132 Muttenz (CH)
(72) Erfinder: SCHEINHARDT, Benjamin, 60529 Frankfurt (DE); BECHTOLD, Uwe, 63128 Dietzenbach (DE); GABEL, Dorothee, 65207 Wiesbaden (DE); HÖVELMANN, Felix, 84453 Mühldorf (DE); KUPFER, Rainer, 65795 Hattersheim (DE)
(74) Vertreter: Mikulecky, Klaus
(86) Internationale Anmeldenummer: PCT/EP2020/069374
(87) Internationale Veröffentlichungsnummer: WO 2021/008994

(56) Entgegenhaltungen:
- WO-A1-2020/151973
- WO-A1-2020/152093
- DE-A1-102006 002 800
- DE-A1-102006 019 553

## Beschreibung

Gegenstand der vorliegenden Erfindung ist die Verwendung wässriger Pigmentpräparationen bzw.-dispersionen für Abtönsysteme und zum Einfärben von Beschichtungsstoffen, Bindemittelsystemen, Anstrichmitteln, Putzen, Lacken und Farben aller Art.

Für die Einfärbung von wässrigen oder lösemittelhaltigen Beschichtungsstoffen, Bindemittelsystemen, Anstrichmitteln, Lacken und Farben, beispielsweise im Architekturfarbensegment, werden oft gebrauchsfertige Pigmentpräparationen verwendet. Pigmentpräparationen sind flüssige Stoffgemenge, in denen das Pigment in einem kontinuierlichen Medium feinverteilt vorliegt. In vielen Anwendungsbereichen haben sich wässrige Pigmentpräparationen, in denen Wasser als kontinuierliches Medium verwendet wird, gegenüber lösemittelbasierten Pigmentpräparationen durchgesetzt oder werden bevorzugt. Dies liegt beispielsweise an regulatorischen Bestimmungen sowie den Vergaberichtlinien moderner Umweltzeichen, wie dem Blauen Engel oder dem Europäischen Umweltzeichen, die den Einsatz flüchtiger organischer Stoffe, sogenannter VOCs (volatile organic compounds), in vielen Anwendungsmedien und damit in letzter Konsequenz auch in den verwendeten Pigmentpräparationen zunehmend begrenzen.

Zur Pigmentdispergierung werden regelmäßig oberflächenaktive Substanzen, wie Netz- und Dispergierhilfsmittel, eingesetzt, welche die Pigmentbenetzung fördern und die Pigmentpartikel in ihrer feinteiligen Form im kontinuierlichen Medium physikalisch stabilisieren. Diese können nichtionischer, anionischer, kationischer oder amphoterer Natur sein sowie tensidischen oder makromolekularen Charakter haben. Die Eigenschaften einer Pigmentpräparation werden maßgeblich durch die enthaltenen Dispergiermittel beeinflusst.

Pigmentpräparationen werden regelmäßig in Tönsystemen, auch Farbmisch- oder Tintingsysteme genannt, als farbgebende Komponenten eingesetzt. Hier wird die Einfärbung einer sogenannten Abtönbasis, welche in weißer oder transparenter oder bunter Form vorliegen kann und bei der es sich um flüssige Bindemittelsysteme aller Art handeln kann, durch softwaregesteuerte Dosierung einer oder einer Kombination verschiedener Pigmentpräparationen erreicht. Dies findet beispielsweise regelmäßig in der Werkstönung (In-Plant-Tinting) zur Fertigung größerer Mengen eines Farbtons Anwendung. Vielfach ist eine Tönung der Abtönbasis erst am Verkaufsort (Point-of-Sale) wirtschaftlicher, da dem Anwender in diesem Fall die vielfältigsten Farbschattierungen zur Verfügung gestellt werden können, ohne diese in größeren Mengen bevorraten zu müssen. Die Dosierung der Pigmentpräparationen erfolgt in diesem Fall regelmäßig mittels Abtönmaschinen, die am Verkaufsort aufgestellt werden.

Die Verwendung in Abtönsystemen erfordert von den Pigmentpräparationen ein geeignetes Rheologieprofil, um eine ausreichende Pumpbarkeit und Dosierbarkeit zu gewährleisten. Eine hohe Dosiergenauigkeit wird gefordert, um Abweichungen vom Zielfarbton zu vermeiden oder zu minimieren. Dies gilt insbesondere für die Verwendung in Abtönmaschinen im Point-of-Sale-Bereich, wo auch sehr kleine Volumina von <0,1 mL akkurat dosiert werden müssen. Bei vielen Pigmentpräparationen handelt es sich um nichtnewtonsche Fluide, d.h. ihre Viskosität ist von den auf sie einwirkenden Scherkräften abhängig. Typischerweise wird eine Viskosität von <10 Pa*s bei einer Scherrate von 5 s⁻¹ und <3 Pa*s bei einer Scherrate von 30 s⁻¹ sowie eine möglichst geringe Thixotropie und Rheopexie gefordert, um die benötigte Pump- und Dosierbarkeit zu erreichen. Dieses rheologische Verhalten muss dabei in einem breiten Temperaturbereich von typischerweise 5 - 40 °C über einen längeren Zeitraum von >1 Jahr erhalten bleiben, auch unter den in diesen Anwendungen häufig auf die Pigmentpräparationen einwirkenden signifikanten Beanspruchungen, beispielsweise durch wiederholtes und intensives Rühren oder Pumpen. Für Pigmentpräparationen mit einem hohen Pigmentgehalt von >30 Gew.-% ist dies eine sehr große technische Herausforderung und erfordert Dispergiermittel mit hervorragender Viskositätsreduktion und Stabilisierungswirkung. Möglichst hohe Pigmentgehalte werden sehr häufig aus technischen Gründen bevorzugt, beispielsweise um die zur Erreichung eines bestimmten Farbtons benötigte zuzugebende Menge einer Pigmentpräparation in die Abtönbasis möglichst gering zu halten und damit eine unerwünschte Veränderung der Eigenschaften der Abtönbasis zu minimieren, und bieten oft auch ökonomische sowie ökologische Vorteile.

Die Pigmentpräparationen müssen unter Scherung, erhöhter Temperatur sowie Druckvariationen stabil sein, beispielsweise beim Pumpen, der Dosierung durch Düsen, Sprühapplikationen oder beim Entgasen/Entlüften.

Für die vorstehend genannten Anwendungen werden Pigmentpräparationen mit geringer Schaumneigung benötigt, um Schaumbildung oder eine Änderung der Dichte zu verhindern. Für die Anwendung in Abtönmaschinen ist dies essentiell, da die Dosierung der Pigmentpräparationen regelmäßig volumetrisch erfolgt und eine Änderung der Dichte zu einer Abweichung vom Zielfarbton führen kann. Da die Schaumneigung der Pigmentpräparationen maßgeblich durch die eingesetzten Dispergiermittel bestimmt wird, werden geeignete schaumarme Dispergiermittel benötigt.

Für die Verwendung in Tönsystemen müssen die Pigmentpräparationen mit einer Vielzahl an verschiedenen Abtönbasen und Bindemittelsystemen kompatibel und verträglich sein, d.h. sie müssen sich darin ohne Flokkulation oder Reaggregation der Pigmentpartikel in beliebigen Verhältnissen einfach und effizient einarbeiten lassen. Im Falle sogenannter Universalpigmentpräparationen müssen diese sowohl mit wässrigen als auch lösemittelhaltigen Anwendungssystemen kompatibel sein. Die Kompatibilität einer Pigmentpräparation mit dem Anwendungsmedium wird dabei maßgeblich über die eingesetzten Dispergiermittel bestimmt. Die Vielzahl an am Markt verfügbaren Bindemittelsystemen mit unterschiedlichsten Zusammensetzungen stellt eine große Herausforderung dar und erfordert Pigmentpräparationen mit einer breiten Kompatibilität.

Für die Einfärbung von Beschichtungsstoffen wird regelmäßig gefordert, dass die verwendeten Pigmentpräparationen deren Eigenschaftsprofil nicht nachteilig beeinflussen. Beispielsweise dürfen die Pigmentpräparationen keine Oberflächendefekte, wie z.B. Krater, im getrockneten Film hervorrufen oder das Trocknungsverhalten oder die Wasseraufnahme verändern. Dies wird maßgeblich durch die in den Pigmentpräparationen eingesetzten Dispergiermittel beeinflusst. Im Falle von Fassadenfarben sind Oberflächeneffekte, wie beispielsweise Ablaufspuren oder Auswaschungen (sogenannte Schneckenspuren), welche nach Bewitterung durch Tau, Nebel, Spritzwasser oder Regen aufgrund wasserlöslicher Einsatzstoffe, beispielsweise Tenside oder Dispergiermittel, hervorgerufen werden können, sehr unerwünscht. Polymere oder höhermolekulare Dispergiermittel weisen dabei eine geringere Neigung zur Bildung solcher unerwünschten Oberflächeneffekte auf.

An Abtönsysteme wird regelmäßig die Anforderung gestellt, eine hohe Anzahl von oft >1000 Farbschattierungen einstellen zu können. Dies setzt voraus, dass die eingesetzten Pigmentpräparationen untereinander kompatibel und in beliebigen Verhältnissen gut mischbar sind. Dies kann beispielsweise dadurch erreicht werden, dass die für das Abtönsystem verwendeten Pigmentpräparationen auf dem gleichen Dispergiermittel basieren. Hierfür werden Dispergiermittel benötigt, die für eine Vielzahl unterschiedlicher organischer und anorganischer Pigmente geeignet sind und die Herstellung entsprechender Pigmentpräparationen mit den vorstehend genannten Eigenschaften erlauben. Für die großtechnische Produktion dieser Pigmentpräparationen bietet der Einsatz eines Dispergiermittels für eine Vielzahl unterschiedlicher Pigmente ebenfalls große Vorteile, beispielsweise hinsichtlich Logistik, Bevorratung sowie Komplexität, und ist damit wünschenswert.

Dies stellt aufgrund der unterschiedlichen Eigenschaften der verschiedenen Pigmente eine besondere Herausforderung für das Dispergiermittel dar. Beispielsweise kann sich die Oberflächenpolarität verschiedener Pigmente stark unterscheiden, so dass eine ausreichende Affinität zwischen dem Dispergiermittel und einer Vielzahl unterschiedlicher Pigmentoberflächen und damit eine ausreichende Viskositätsreduktion und Partikelstabilisierungswirkung für die unterschiedlichen Pigmente schwer zu erreichen ist. Ebenso können sich verschiedene Pigmente in ihren Partikelgrößen und -morphologien stark unterscheiden. Ein Dispergiermittel, welches für eine Vielzahl unterschiedlicher Pigmente gleichermaßen geeignet sein soll, muss daher sowohl vergleichsweise kleinteilige als auch große Pigmentpartikel gleichermaßen stabilisieren können. Die Bereitstellung eines Dispergiermittels, welches sowohl für organische Pigmente, anorganische Pigmente sowie Ruße gleichermaßen geeignet ist, stellt daher eine große Herausforderung dar.

Fortlaufende Verschärfungen von regulatorischen Bestimmungen oder Vergaberichtlinien von Umweltzeichen sorgen dafür, dass vermehrt übliche Formulierungskomponenten für Pigmentpräparationen für manche Anwendungsgebiete nicht mehr oder nur noch in begrenztem Maße einsetzbar sind. Beispielsweise gibt es in der Industrie einen starken Trend den Einsatz klassischer Topf-Konservierungsmittel, beispielsweise Isothiazolinone, zu begrenzen oder ganz auf diese zu verzichten. Alternative Konzepte, um dennoch eine ausreichende mikrobiologische Stabilität zu erreichen, basieren oft auf der Einstellung einer zur Konservierung ausreichenden Alkalität. Daher werden Dispergiermittel benötigt, welche auch unter alkalischen pH-Werten von >10 chemisch beständig sind und eine ausreichende Partikelstabilisierung sowie Viskositätsreduktion beibehalten.

Aus dem gleichen Grund ist die Auswahl einsetzbarer Netz- und Dispergiermittel heute stark begrenzt. Beispielsweise sind Alkylphenolethoxylate (APEOs) aufgrund der bioakkumulativen und hormonell wirkenden Abbauprodukte heute streng reguliert und für viele Anwendungen verboten. Der Einsatz von Tristyrylphenolethoxylaten (TSPEOs) ist zwar nach wie vor möglich, allerdings gibt es in der Industrie aufgrund des nachteiligen ökotoxikologischen Profils einen starken Trend auf diese Rohstoffe zu verzichten. Der Einsatz von in der Vergangenheit verwendeten Novolak- oder Bisphenol A-basierten Dispergiermitteln wird aus den gleichen Gründen sukzessive begrenzt. Auch die Verwendung von Umsetzungsprodukten auf Basis primärer und sekundärer Amine als Dispergiermittel ist für manche Anwendungen aus regulatorischen sowie anwendungstechnischen Gründen kritisch und damit nur begrenzt möglich.

Die Bereitstellung von wässrigen Pigmentpräparationen für die vorstehend genannten Anwendungen, welche neben den hohen technischen Anforderungen auch den regulatorischen Anforderungen, beispielsweise hinsichtlich dem toxikologischen und ökotoxikologischen Profil, genügen, ist eine zunehmende Herausforderung an die Industrie und kann auf Basis des Standes der Technik nur unzureichend gelöst werden.

Im Stand der Technik sind wässrige Pigmentpräparationen auf Basis unterschiedlicher Dispergierhilfsmittel beschrieben.

EP 1 078 946 offenbart wässrige Pigmentpasten auf Basis von blockcopolymeren, styrenoxidhaltigen Polyalkylenoxiden als Pigmentnetzmittel.

EP 1 805 270 beschreibt wasserbasierende Pigmentpräparationen auf Oligoesterbasis.

DE 10 2006 002 800 offenbart wässrige Pigmentpräparationen auf Basis von Copolymeren aus Styroloxid, Alkylenoxiden und zwei oder mehrwertigen Aminen sowie Alkoholen. Pigmentpräparationen mit für die vorstehend genannten Anwendungen benötigtem Eigenschaftsprofil sind hier jedoch nicht beschrieben. Beispielsweise ist die notwendige Kompatibilität der Pigmentpräparationen mit einer Vielzahl an unterschiedlichen Bindemittelsystemen hier nicht erkannt worden. Aufgrund regulatorischer sowie anwendungstechnischer Anforderungen ist zudem der Einsatz von Dispergiermitteln auf Basis von Aminen in den vorstehend genannten Anwendungen oft nicht gewünscht, was die in DE 10 2006 002 800 beschriebenen Pigmentpräparationen stark begrenzt. Die offenbarten Viskositäten der Pigmentpräparationen liegen zwar in dem gewünschten Bereich, allerdings sind die dort beschriebenen Pigmentgehalte und die damit verbundenen Farbstärken der Pigmentpräparationen vergleichsweise gering und die Rheologie sowie die Lagerstabilität der Pigmentpräparationen bei den für die oben genannten Anwendungen benötigten Pigmentgehalten ist nicht beschrieben. Auch die Eignung für Abtönsysteme, insbesondere im Point-of-Sale-Bereich, ist nicht beschrieben.

EP 2 147 066 beschreibt wässrige Pigmentpräparationen auf Basis nichtionischer Copolymere, die mit Hilfe von Makromonomeren aus Polyethylen/Polypropylenglykol-Mono(meth)acrylsäureestern hergestellt werden.

Die im Stand der Technik beschriebenen wässrigen Pigmentpräparationen erfüllen oft nicht das für die vorstehend genannten Anwendungen geforderte toxikologische und ökotoxikologische Profil. Ferner weisen sie häufig eine unzureichende Kompatibilität mit unterschiedlichen wässrigen oder lösemittelhaltigen Bindemittelsystemen auf. Zudem sind deren rheologisches Verhalten sowie Lagerstabilität bei den geforderten Pigmentgehalten oft stark verbesserungsbedürftig.

Wässrige Pigmentpräparationen, welche alle Bedingungen für die vorstehend beschriebenen Anwendungen erfüllen, ohne Nachteile in Kauf nehmen zu müssen, sind aus der früheren, jedoch nachveröffentlichten Patentanmeldung WO2020151973 A1 bzw. EP3914633A1 bekannt.

Ausgehend vom vorveröffentlichten Stand der Technik lag der vorliegenden Erfindung die Aufgabe zugrunde, wässrige Pigmentpräparationen für die Verwendung zum Pigmentieren natürlicher oder synthetischer Materialien bereitzustellen, die toxikologisch und ökotoxikologisch einwandfrei und frei von Alkylphenol-, Tristyrylphenol-, Novolak- und Bisphenol A-Derivaten sind, wobei die Pigmentpräparation in einem Tönsystem als farbgebende Komponente eingesetzt wird, und worin die Einfärbung einer Abtönbasis, bei der es sich um ein in weißer oder transparenter oder bunter Form vorliegendes flüssiges Bindemittelsystem handelt, durch softwaregesteuerte Dosierung der Pigmentpräparation erreicht wird. Weiterhin sollten die Pigmentpräparationen eine breite Kompatibilität untereinander sowie mit einer Vielzahl unterschiedlicher Bindemittelsysteme aufweisen und zu keinen unerwünschten Oberflächendefekten oder -effekten im Anwendungssystem führen. Die wässrigen Pigmentpräparationen sollten über eine hohe Farbstärke verfügen, eine geringe Schaumneigung sowie ein geeignetes Rheologieprofil bei möglichst hohem Pigmentgehalt aufweisen, um eine ausreichende Dosierbarkeit auf marktüblichen Abtönmaschinen zu erlauben. Ferner sollten die Präparationen lager- und scherstabil sein, d.h. die vorstehend beschriebenen Eigenschaften sollten auch bei Lagerung über einen längeren Zeitraum oder unter Scherung stabil erhalten bleiben.

Diese Aufgabe konnte überraschenderweise dadurch gelöst werden, dass das Pigment mit speziellen, nachstehend definierten nichtionischen oder anionisch modifizierten Copolymeren aus drei- oder höherwertigen Polyolen, Styroloxid und Alkylenoxiden dispergiert wird. Bei der Verwendung anderer Copolymere aus Styroloxid und Alkylenoxiden erhält man wässrige Pigmentpräparationen, die nicht das gesamte vorstehend genannte Eigenschaftsprofil aufweisen, insbesondere hinsichtlich der angestrebten koloristischen Eigenschaften, Pigmentgehalt, Kompatibilität, Rheologie, Schaumneigung sowie Stabilität.

Gegenstand der Erfindung ist daher die Verwendung einer Pigmentpräparation zum Pigmentieren natürlicher oder synthetischer Materialien wobei die Pigmentpräparation enthaltend
(A) mindestens ein organisches und/oder anorganisches Pigment und/oder Füllstoff
(B) mindestens ein Dispergiermittel der Formel (I) oder (II), oder Mischungen der Dispergiermittel der Formeln (I) und (II), 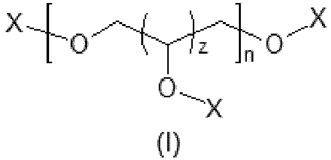 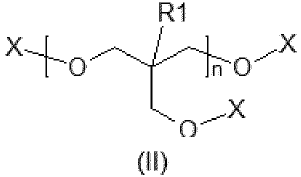
wobei
n eine ganze Zahl größer oder gleich 1,
z eine ganze Zahl größer oder gleich 1,
R1 ein aliphatischer, linearer oder verzweigter Kohlenwasserstoffrest mit 1 bis 30 Kohlenstoffatomen oder ein Wasserstoffatom oder die Struktureinheit -O-X oder die Struktureinheit -CH₂-O-X ist,
und Struktureinheit X der Formel (III) entspricht 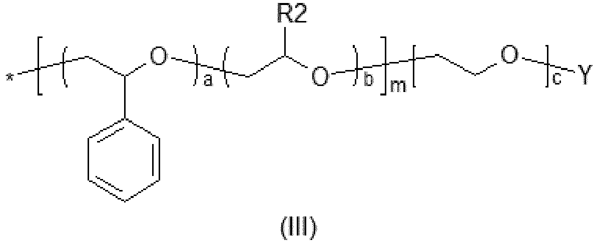
worin
- a: eine ganze Zahl von 1 bis 50, bevorzugt 1 bis 20, besonders bevorzugt 1 bis 10,
- b: eine ganze Zahl von 0 bis 50, bevorzugt 0 bis 20, besonders bevorzugt 0 bis 10,
- c: eine ganze Zahl von 1 bis 100, bevorzugt 10 bis 50,
- m: eine ganze Zahl von 1 bis 50, bevorzugt 1 bis 10,
- R2: ein aliphatischer, linearer oder verzweigter Kohlenwasserstoffrest mit 1 bis 30 Kohlenstoffatomen,
- Y: -SO₃M, -SO₂M, -PO₃M₂, -CH₂COOM und
- M: Wasserstoff oder ein Kation ist, vorzugsweise aus der Gruppe Na⁺, K⁺, NH₄⁺, Triethanolammonium, oder eine Kombination davon, und Wasser enthält, wobei die Pigmentpräparation in einem Tönsystem als farbgebende Komponente eingesetzt wird, und worin die Einfärbung einer Abtönbasis, bei der es sich um ein in weißer oder transparenter oder bunter Form vorliegendes flüssiges Bindemittelsystem handelt, durch softwaregesteuerte Dosierung der Pigmentpräparation erreicht wird.

Ferner kann die verwendete Pigmentpräparation noch folgende weitere Additive enthalten:
(C) gegebenenfalls Netzmittel,
(D) und / oder gegebenenfalls weitere Tenside und/oder Dispergiermittel,
(E) und/oder gegebenenfalls eine oder mehrere hydrotrope Substanzen und/oder ein oder mehrere organische Lösemittel und/oder Mischungen daraus,
(F) und/oder gegebenenfalls ein oder mehrere Bindemittel und/oder Co-Bindemittel,
(G) und/oder gegebenenfalls weitere zur Herstellung wässriger Pigmentdispersionen übliche Zusatzstoffe, und
(H) Wasser.

Bevorzugte Pigmentpräparationen enthalten 5 bis 80 Gew.-%, vorzugsweise 10 bis 70 Gew.-%, insbesondere bevorzugt 30 bis 70 Gew % an Komponente (A).

Bevorzugte Pigmentpräparationen enthalten 0,1 bis 30 Gew.-%, vorzugsweise 2 bis 20 Gew.-%, insbesondere bevorzugt 5 bis 15 Gew% an Komponente (B).

Besonders bevorzugte Pigmentpräparationen enthalten an Komponente
(A) 5 bis 80 Gew.-%, insbesondere 10 bis 70 Gew.-%,
(B) 0,1 bis 30 Gew.-%, insbesondere 2 bis 20 Gew.-%,
(C) 0 bis 10 Gew.-%, insbesondere 0,1 bis 5 Gew.-%,
(D) 0 bis 20 Gew.-%, insbesondere 1 bis 10 Gew.-%,
(E) 0 bis 30 Gew.-%, insbesondere 5 bis 20 Gew.-%,
(F) 0 bis 30 Gew.-%, insbesondere 1 bis 10 Gew.-%,
(G) 0 bis 20 Gew.-%, insbesondere 0,1 bis 5 Gew.-%,
(H) Rest Wasser,
jeweils bezogen auf das Gesamtgewicht (100 Gew.-%) der Pigmentpräparation.

Im Falle, dass die verwendete Pigmentpräparation eine oder mehrere der Komponenten (C), (D), (E), (F) und (G) enthält, beträgt deren Minimalkonzentration unabhängig voneinander vorzugsweise mindestens 0,01 Gew.-%, insbesondere mindestens 0,1 Gew.-%, bezogen auf das Gesamtgewicht der Pigmentpräparation.

Die Komponente (A) der verwendeten Pigmentpräparation ist ein feinteiliges organisches oder anorganisches Pigment oder ein Füllstoff oder ein Gemisch verschiedener organischer und/oder anorganischer Pigmente und/oder Füllstoffe. Die Komponente (A) kann auch ein Farbstoff sein, der in bestimmten Lösemitteln löslich ist und in anderen Lösemitteln Pigmentcharakter hat. Die Pigmente können sowohl in Form trockenen Pulvers als auch als wasserfeuchter Presskuchen eingesetzt werden.

Als organische Pigmente kommen Monoazo-, Disazo-, verlackte Azo-, β-Naphthol-, Naphthol AS-, Benzimidazolon-, Disazokondensations-, Azo-Metallkomplex-Pigmente und polycyclische Pigmente wie z.B. Phthalocyanin-, Chinacridon-, Perylen-, Perinon-, Thioindigo-, Anthanthron-, Anthrachinon-, Flavanthron-, Indanthron-, Isoviolanthron-, Pyranthron-, Dioxazin-, Chinophthalon-, Isoindolinon-, Isoindolin- und Diketopyrrolopyrrol-Pigmente oder Ruße in Betracht.

Als beispielhafte Auswahl besonders bevorzugter organischer Pigmente sind dabei Rußpigmente, wie z.B. Gas- oder Furnaceruße; Monoazo- und Disazopigmente, insbesondere die Colour Index Pigmente Pigment Yellow 1, Pigment Yellow 3, Pigment Yellow 12, Pigment Yellow 13, Pigment Yellow 14, Pigment Yellow 16, Pigment Yellow 17, Pigment Yellow 73, Pigment Yellow 74, Pigment Yellow 81, Pigment Yellow 83, Pigment Yellow 87, Pigment Yellow 97, Pigment Yellow 111, Pigment Yellow 126, Pigment Yellow 127, Pigment Yellow 128, Pigment Yellow 155, Pigment Yellow 174, Pigment Yellow 176, Pigment Yellow 191, Pigment Yellow 213, Pigment Yellow 214, Pigment Yellow 219, Pigment Red 38, Pigment Red 144, Pigment Red 214, Pigment Red 242, Pigment Red 262, Pigment Red 266, Pigment Red 269, Pigment Red 274, Pigment Orange 13, Pigment Orange 34 oder Pigment Brown 41; β-Naphthol- und Naphthol AS-Pigmente, insbesondere die Colour Index Pigmente Pigment Red 2, Pigment Red 3, Pigment Red 4, Pigment Red 5, Pigment Red 9, Pigment Red 12, Pigment Red 14, Pigment Red 53:1, Pigment Red 112, Pigment Red 146, Pigment Red 147, Pigment Red 170, Pigment Red 184, Pigment Red 187, Pigment Red 188, Pigment Red 210, Pigment Red 247, Pigment Red 253, Pigment Red 256, Pigment Orange 5, Pigment Orange 38 oder Pigment Brown 1; verlackte Azo und Metallkomplexpigmente, insbesondere die Colour Index Pigmente Pigment Red 48:2, Pigment Red 48:3, Pigment Red 48:4, Pigment Red 57:1, Pigment Red 257, Pigment Orange 68 oder Pigment Orange 70; Benzimidazolinpigmente, insbesondere die Colour Index Pigmente Pigment Yellow 120, Pigment Yellow 151, Pigment Yellow 154, Pigment Yellow 175, Pigment Yellow 180, Pigment Yellow 181, Pigment Yellow 194, Pigment Red 175, Pigment Red 176, Pigment Red 185, Pigment Red 208, Pigment Violet 32, Pigment Orange 36, Pigment Orange 62, Pigment Orange 72 oder Pigment Brown 25; Isoindolinon- und Isoindolinpigmente, insbesondere die Colour Index Pigmente Pigment Yellow 139 oder Pigment Yellow 173; Phthalocyaninpigmente, insbesondere die Colour Index Pigmente Pigment Blue 15, Pigment Blue 15:1, Pigment Blue 15:2, Pigment Blue 15:3, Pigment Blue 15:4, Pigment Blue 15:6, Pigment Blue 16, Pigment Green 7 oder Pigment Green 36; Anthanthron-, Anthrachinon-, Chinacridon-, Dioxazin-, Indanthron-, Perylen-, Perinon- und Thioindigopigmente, insbesondere die Colour Index Pigmente Pigment Yellow 196, Pigment Red 122, Pigment Red 149, Pigment Red 168, Pigment Red 177, Pigment Red 179, Pigment Red 181, Pigment Red 207, Pigment Red 209, Pigment Red 263, Pigment Blue 60, Pigment Violet 19, Pigment Violet 23 oder Pigment Orange 43; Triarylcarboniumpigmente, insbesondere die Colour Index Pigmente Pigment Red 169, Pigment Blue 56 oder Pigment Blue 61; Diketopyrrolopyrrolpigmente, insbesondere die Colour Index Pigmente Pigment Red 254, Pigment Red 255, Pigment Red 264, Pigment Red 270, Pigment Red 272, Pigment Orange 71, Pigment Orange 73, Pigment Orange 81, zu nennen.

Ferner eignen sich verlackte Farbstoffe wie Ca-, Mg-, Al-Lacke von sulfonsäure- und/oder carbonsäuregruppenhaltigen Farbstoffen.

Geeignete anorganische Pigmente sind beispielsweise Titandioxide, Zinksulfide, Zinkoxide, Eisenoxide, Magnetite, Manganeisenoxide, Chromoxide, Ultramarin, Nickel- oder Chromantimontitanoxide, Mangantitanrutile, Cobaltoxide, Mischoxide des Cobalts und Aluminiums, Rutilmischphasenpigmente, Sulfide der seltenen Erden, Spinelle des Cobalts mit Nickel und Zink, Spinelle basierend auf Eisen und Chrom mit Kupfer Zink sowie Mangan, Bismutvanadate sowie Verschnittpigmente. Insbesondere werden die Colour Index Pigmente Pigment Yellow 184, Pigment Yellow 53, Pigment Yellow 42, Pigment Yellow Brown 24, Pigment Red 101, Pigment Blue 28, Pigment Blue 36, Pigment Green 50, Pigment Green 17, Pigment Black 11, Pigment Black 33 sowie Pigment White 6 verwendet. Bevorzugt werden auch häufig Mischungen anorganischer Pigmente verwendet. Mischungen von organischen mit anorganischen Pigmenten werden ebenfalls häufig verwendet.

Geeignete Füllstoffe sind beispielsweise feinteilige Erze, Mineralien und schwer- oder unlösliche Salze, wie z.B. Carbonate, Calciumcarbonat, Calcite und/oder Aragonite, Dolomite, Siliciumdioxid, Quarz, Cristobalit, Kieselgur, Silikate, Aluminiumsilikate, Kieselsäuren, Talkum, Kaolin, Glimmer, Feldspat, sowie Bariumsulfat. Bevorzugt werden auch häufig Mischungen von Füllstoffen verwendet. Mischungen von organischen und/oder anorganischen Pigmenten mit Füllstoffen werden ebenfalls häufig verwendet. Formulierungen, welche ausschließlich einen oder mehrere Füllstoffe enthalten, dienen beispielsweise der Abmischung von Pigmentpräparationen zur Einstellung des gewünschten Eigenschaftsprofils, wie etwa des Pigmentgehaltes, der Rheologie, Dichte oder Kompatibilität.

Bei den Struktureinheiten (I) und (II) der Komponente (B) handelt es sich um Umsetzungsprodukte aus alkoxylierbaren drei- oder höherwertigen Polyolen, vorzugsweise Diglycerin, Erythrit, Glycerin, Pentaerythrit, Polyglycerine, Sorbit, Trimethylolpropan oder Xylitol. In einer bevorzugten Ausführungsform steht Y für H oder -PO₃M₂.

Als Komponente (C) werden beispielsweise kationische, anionische, amphotere oder nicht ionogene Verbindungen verwendet, die die Pigmentbenetzung fördern (Netzmittel, Benetzter).

Als Komponente (D) der verwendeten Pigmentpräparationen dienen übliche, zur Herstellung wässriger Pigmentdispersionen geeignete Dispergiermittel und Tenside oder Gemische solcher Substanzen. Üblicherweise werden hierfür anionische, kationische, amphotere oder nichtionische grenzflächenaktive Verbindungen verwendet. Besonders bewährt haben sich darunter Dispergiermittel, die eine oder mehrere mittel- oder langkettige Kohlenwasserstoffketten besitzen, zum Teil auch solche, die über aromatische Ringgruppen verfügen. Von der Vielzahl der Verbindungen soll an dieser Stelle nur eine Auswahl angeführt werden, ohne jedoch die Anwendbarkeit der erfindungsgemäßen Präparationen auf diese Beispiele einzuschränken. Beispiele sind Alkylsulfate wie z.B. Laurylsulfat, Stearylsulfat oder Octadecylsulfat, primäre Alkylsulfonate wie z.B. Dodecylsulfonat, und sekundäre Alkylsulfonate, insbesondere das C₁₃-C₁₇-Alkansulfonat-Natriumsalz, Alkylphosphate, Alkylbenzolsulfonate wie beispielsweise die Dodecylbenzolsulfonsäure, ebenso alle Salze dieser Verbindungen. Ferner eignet sich Sojalecithin oder es werden Kondensationsprodukte aus Fettsäure und Taurin oder Hydroxyethansulfonsäure verwendet, ebenso Alkoxylierungsprodukte von Rizinusölkolophoniumestern, Fettalkoholen, Fettaminen, Fettsäuren und Fettsäureamiden, diese Alkoxylierungsprodukte können desgleichen mit ionischen Endgruppen ausgestattet sein, beispielsweise als Sulfobernsteinsäure-Halbester oder auch als Sulfonsäure-, Schwefelsäure- und Phosporsäureester, sowie deren Salze, den Sulfonaten, Sulfaten oder Phosphaten. Auch sind nichtionische oder anionisch modifizierte Copolymere geeignet, die mit Hilfe von Makromonomeren aus Polyethylen/Polypropylen-glykol-Mono(meth)acrylsäureestern hergestellt werden, in ähnlicher Weise auch nichtionische oder anionisch modifizierte blockcopolymere, styrenoxidhaltige Polyalkylenoxide.

Der Komponente (E) entsprechen organische Lösemittel oder hydrotrope Substanzen. Dabei kann es sich beispielsweise um folgende Verbindungen oder um ein Gemisch davon handeln: Ein- oder mehrwertige Alkohole, deren Ether und Ester, z.B. Alkanole, insbesondere mit 1 bis 4 C-Atomen, wie beispielsweise Methanol, Ethanol, Propanol, Isopropanol, Butanol, Isobutanol; zwei- oder dreiwertige Alkohole, insbesondere mit 2 bis 5 C-Atomen, z.B. Ethylenglycol, Propylenglycol, 1,3-Propandiol, 1,4-Butandiol, 1,5-Pentandiol, 1,6-Hexandiol, 1 ,2,6-Hexantriol, Glycerin, Diethylenglycol, Dipropylenglycol, Triethylenglycol, Tripropylenglycol; niedere Alkylether von mehrwertigen Alkoholen, wie z.B. Ethylenglycolmono-methyl-, -ethyl- oder -butyl-ether, Triethylenglycolmono-methyl- oder -ethyl-ether; Ketone und Ketonalkohole, wie z.B. Aceton, Methylethylketon, Diethylketon, Methylisobutylketon, Methylpentylketon, Cyclopentanon, Cyclohexanon, Diacetonalkohol; Copolymere aus Ethylen- und Propylenglycol; Polyethylenglycol, insbesondere mit einer mittleren Molmasse von 250 bis 1000 g/mol; Polypropylenglycol; niedere Alkylether von Polyethylenglycolen, wie z.B. alpha-Methyl-omega-hydroxy-polyethylenglycolether, insbesondere mit einer mittleren Molmasse von 250 bis 1000 g/mol.

Der Komponente (F) entsprechen organische oder anorganische Bindemittel bzw. Co-Bindemittel. Dabei kann es sich beispielsweise um folgende Verbindungen oder um ein Gemisch davon handeln: Wasserglas, insbesondere Natrium- und Kaliumsilikate der Formel Na₂O × n SiO₂ bzw. K₂O × n SiO₂, worin n = 2,8 - 3,5 bedeutet; Kieselsol; Alkylsiliconate, insbesondere der allgemeinen Formel HO-[Si(R)(OM)-O-]ₙH, worin R für einen Alkylrest mit 1 bis 8 C-Atomen (z.B. Methyl, Ethyl, n-Propyl, i-Propyl, n-Butyl, i-Butyl, t-Butyl) und M für ein Kation, insbesondere der Alkalimetalle (z.B. Lithium, Natrium, Kalium), steht und n eine Zahl im Bereich von 1 bis 6 bedeutet, wie z.B. Natrium- oder Kaliummethylsiliconat; Homopolymere und/oder Copolymere sowie deren Dispersionen enthaltend Acrylate, Alkylacrylate, wie z.B. Methacrylate, Acrylsäure, Methacrylsäure, Ethylen, Vinylacetat und/oder Styrol.

Als Komponente (G) werden beispielsweise Verdicker, Konservierungsmittel, Viskositätsstabilisatoren und Mahlhilfsmittel eingesetzt. Weitere übliche Zusatzstoffe können Antiabsetzmittel, Lichtschutzmittel, Antioxidantien, Entschäumer/Entgaser/Entlüfter, schaumreduzierende Mittel, Antibackmittel sowie Additive sein, welche die Viskosität und Rheologie günstig beeinflussen. Als Mittel zur Regulierung der Viskosität kommen z.B. Polyvinylalkohol, Polysaccharide, wie z.B. Cellulose, mikro- oder nanokristalline Cellulose, Celluloseether und modifizierte Celluloseether, insbesondere hydrophob modifizierte Celluloseether, Xanthan, pyrogene Kieselsäure, zum Beispiel Aerosile, Polyacrylat- und/oder Polyurethan- und/oder Polyharnstoff-Verdicker, insbesondere mit Molekulargewichten von 10³ bis 10⁵ g/mol, Tonmineralien und Schichtsilikate, insbesondere solche bestehend aus Smectit, Montmorillonit, Hectorit und Bentonit oder deren Mischungen, sowie organisch modifizierte und delaminierte Schichtsilikate infrage. Wasserlösliche natürliche oder künstliche Harze sowie Polymere als Filmbildner bzw. Bindemittel zur Erhöhung von Haft- und Abriebfestigkeit kommen ebenso in Betracht. Als pH-Regulatoren kommen organische oder anorganische Basen und Säuren zum Einsatz. Bevorzugte anorganische Basen sind Natrium-, Kalium- oder Lithiumhydroxid. Der Komponente (G) können auch Fette und Öle pflanzlicher und tierischer Herkunft entsprechen, beispielsweise Rindertalg, Palmkernfett, Kokosfett, Rapsöl, Sonnenblumenöl, Leinöl, Palmöl, Sojaöl, Erdnussöl, Baumwollsaatöl, Maisöl, Mohnöl, Olivenöl, Rizinusöl, Rüböl, Safloröl, Sojabohnenöl, Distelöl, Sonnenblumenöl, Heringöl, Sardinenöl. Auch sind die gesättigten und ungesättigten höheren Fettsäuren gängige Additive, z.B. Palmitinsäure, Cyprylsäure, Caprinsäure, Myristinsäure, Laurinsäure, Stearinsäure, Ölsäure, Linolsäure, Linolensäure, Capronsäure, Caprylsäure, Arachinsäure, Behensäure, Palmitoleinsäure, Gadoleinsäure, Erucasäure und Ricinolsäure, sowie deren Salze.

Zur Herstellung der Pigmentpräparationen benutztes Wasser, Komponente (H), wird vorzugsweise in Form von destilliertem oder entsalztem Wasser eingesetzt. Auch Trinkwasser (Leitungswasser) und/oder Wasser natürlichen Ursprungs kann verwendet werden.

Die verwendeten Pigmentpräparationen sind dadurch gekennzeichnet, dass sie bei einer Scherrate von 5 s⁻¹ eine Viskosität von <10 Pa*s, bevorzugt von <8 Pa*s und besonders bevorzugt von <6 Pa*s, sowie bei einer Scherrate von 30 s⁻¹ eine Viskosität von <3 Pa*s, bevorzugt von <2,5 Pa*s und besonders bevorzugt von <2 Pa*s aufweisen. Das rheologische Profil der erfindungsgemäßen Pigmentpräparationen kann dabei typischerweise durch die Auswahl des Verhältnisses der Komponenten (A) und (B) gesteuert werden. Auch die zusätzliche Verwendung der Komponenten (C), (D) und (G) kann zur Erreichung des vorstehend genannten rheologischen Profils genutzt werden.

Als besonders vorteilhaft hat sich im Zusammenhang mit den verwendeten wässrigen Pigmentpräparationen herausgestellt, dass diese über eine sehr gute Kompatibilität mit einer Vielzahl an Beschichtungsstoffen und Bindemittelsystemen, eine geringe Schaumneigung sowie eine gute Scherstabilität verfügen und über einen längeren Zeitraum sehr stabil sind. Als sehr vorteilhaft hat sich auch erwiesen, dass die verwendeten wässrigen Pigmentpräparationen eine hohe Farbstärke aufweisen und auch bei hohen Pigmentgehalten von >30 Gew.-% das erwünschte Rheologieprofil sowie eine ausgezeichnete Lagerstabilität aufweisen.

Ferner sind die verwendeten Pigmentpräparationen frei von Alkylphenol-, Tristyrylphenol-, Novolak- und Bisphenol A-Derivaten.

Die verwendeten Pigmentpräparationen weisen einen pH-Wert von 4 - 14, bevorzugt von 6 - 13 und besonders bevorzugt von 6,5 - 12,5 auf.

Beschrieben ist auch ein Verfahren zur Herstellung solcher Pigmentpräparationen, dadurch gekennzeichnet, dass man die Komponente (A) in Form von Pulver, Granulat oder wässrigem Presskuchen in Gegenwart von Wasser (G) sowie den Komponenten (B) und gegebenenfalls (C), (D), (E) und (F) dispergiert, anschließend gegebenenfalls Wasser (G), sowie gegebenenfalls eine oder mehrere der Komponenten (C), (D), (E) und (F) zumischt und gegebenenfalls die erhaltende wässrige Pigmentdispersion mit Wasser (G) verdünnt.

Das Pigment und die Dispergierhilfsmittel der Formel (I) oder (II) oder Mischungen der Dispergiermittel der Formeln (I) und (II) werden hierbei mit Hilfe eines Dispergieraggregates oder Kombinationen aus verschiedenen Dispergieraggregaten, vorzugsweise einem Dissolver (Sägezahnrührer) und/oder einer Rührwerkskugelmühle unter Einwirkung von metallischen oder nichtmetallischen Mahlkörpern vom Durchmesser kleiner oder gleich 2 mm in Gegenwart von Wasser feindispergiert oder feinverteilt. Die übrigen Zusatzstoffe können bei der Feinverteilung zugegen sein und/oder anschließend zugegeben werden.

Gegenstand der Erfindung ist die Verwendung der Pigmentpräparationen als Farbmittel zum Pigmentieren und Färben von natürlichen und synthetischen Materialien aller Art, insbesondere von wässrigen oder lösemittelhaltigen Beschichtungsstoffen, Bindemittelsystemen, Anstrichmitteln, Dispersions- und Lackfarben (Dispersionslacken), Lasuren, Kalkfarben, Silikatfarben, Silikonharzfarben, sowie Putzen. Beschichtungsstoffe im Sinne der vorliegenden Erfindung sollen Zusammensetzungen gemäß DIN EN ISO 4618:2015-01 umfassen.

Gegenstand der Erfindung ist die Verwendung der Pigmentpräparationen in Abtönsystemen, umfassend A) mindestens eine erfindungsgemäße Pigmentpräparation, vorzugsweise mindestens zwei erfindungsgemäße Pigmentpräparationen, besonders bevorzugt mindestens drei erfindungsgemäße Pigmentpräparationen, und B) mindestens eine Abtönbasiszusammensetzung. Die Abtönbasis stellt z.B. eine Dispersionsfarbe, eine Lackfarbe, eine Kalkfarbe, eine Silikatfarbe, eine Silikonharzfarbe, eine Dispersionssilikatfarbe, einen Leichtputz, eine Bodenbeschichtung, einen Putz, eine wässrige Lasur, eine lösemittelhaltige Lasur, einen Wasserlack oder einen Lösemittellack dar, oder bildet eine Grundrezeptur für die vorstehend genannten Systeme.

Ferner eignen sich die Pigmentpräparationen zur Einfärbung von makromolekularen Materialien aller Art, z.B. natürlichen und synthetischen Fasermaterialien, Wurstdärmen, Saatgut, Düngemitteln, Glas, Isolierstoffen, wie beispielsweise Glaswolle, Beton, Holzbeizen, Wachsen, Paraffinen, Tuschen, Pasten für Kugelschreiber, Kreiden, Wasch- und Reinigungsmitteln, Schuhpflegemitteln, Latex-Produkten, Schleifmitteln, bei Viskose-Spinnfärbungen sowie zum Einfärben von Kunststoffen bzw. hochmolekularen Materialien aller Art. Hochmolekulare organische Materialien sind beispielsweise Celluloseether und -ester, wie Ethylcellulose, Nitrocellulose, Celluloseacetat oder Cellulosebutyrat, natürliche Harze oder Kunstharze, wie Polymerisationsharze oder Kondensationsharze, z.B. Aminoplaste, insbesondere Harnstoff- und Melaminformaldehydharze, Alkydharze, Acrylharze, Phenoplaste, Polycarbonate, Polyolefine, wie Polystyrol, Polyvinylchlorid, Polyethylen, Polypropylen, Polyacrylnitril, Polyacrylsäureester, Polyamide, Polyurethane oder Polyester, Gummi, Casein, Latices, Silikon, Silikonharze, einzeln oder in Mischung.

### Beispiele

Beispiele der in den Pigmentpräparationen eingesetzter Dispergiermittel sind folgende Verbindungen.

| Muster | Zusammensetzung | Chemische Struktur |
|---|---|---|
| Referenz-Muster 1 | Pentaerythrit | 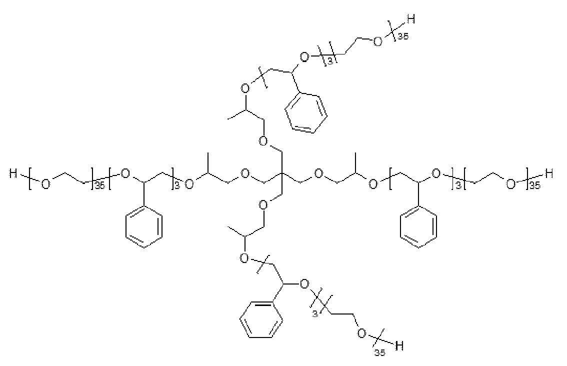 |
| | + 4 Mol Propylenoxid | |
| | + 12 Mol Styroloxid | |
| | + 140 Mol Ethylenoxid | |
| Referenz-Muster 2 | Glycerin | 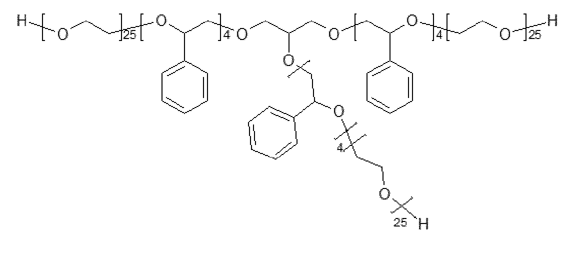 |
| | + 12 Mol Styroloxid | |
| | + 75 Mol Ethylenoxid | |
| Referenz-Muster 3 | Glycerin | 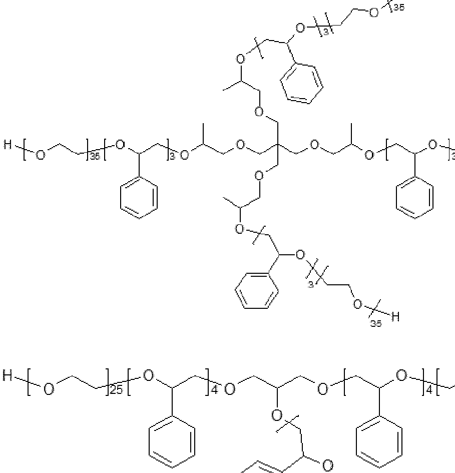 |
| | + 6 Mol Styroloxid | |
| | + 42 Mol Ethylenoxid | |
| Muster 4 | Glycerin | 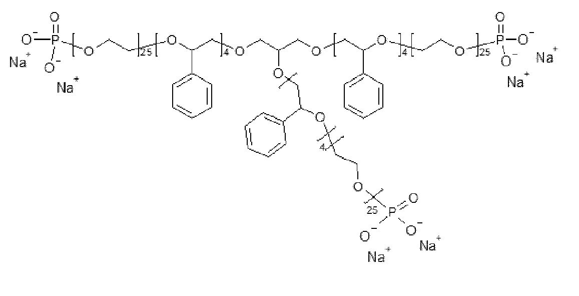 |
| | + 12 Mol Styroloxid | |
| | + 75 Mol Ethylenoxid | |
| | + Phosphat Natriumsalz | |
| Vergleichsmuster 1 | Ethylendiamin | 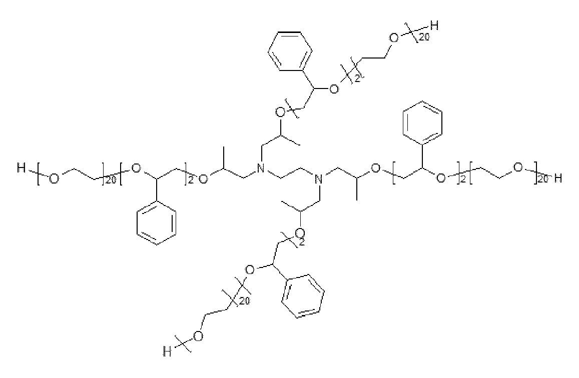 |
| | + 4 Mol Propylenoxid | |
| | + 8 Mol Styroloxid | |
| | + 80 Mol Ethylenoxid | |

### Herstellung einer Pigmentpräparation:

Das Pigment wurde, entweder als Pulver, Granulat oder als Presskuchen, zusammen mit den Dispergiermitteln und den anderen Zusätzen in entionisiertem Wasser angeteigt und dann mit einem Dissolver (z.B. von der Firma VMAGetzmann GmbH, Type AE3-M1) oder einer anderen geeigneten Apparatur homogenisiert und vordispergiert. Die anschließende Feindispergierung erfolgte mit Hilfe einer Perlmühle (z.B. mit AE3-M1 von VMA-Getzmann GmbH) oder einem anderen geeigneten Dispergieraggregat, wobei die Mahlung mit Glasperlen der Größe d = 1,0 - 1,2 mm unter Kühlung bis zum Erreichen der gewünschten Koloristik, erfolgte. Im Anschluss wurde die Dispersion mit entionisiertem Wasser auf die gewünschte Pigmentendkonzentration eingestellt, die Mahlkörper abgetrennt und die Pigmentpräparation isoliert.

Die in den folgenden Beispielen beschriebenen Pigmentpräparationen wurden nach dem zuvor beschriebenen Verfahren hergestellt, wobei die Bestandteile in den angegebenen Mengen so verwendet wurden, dass 100 Teile der jeweiligen Pigmentpräparation entstehen. In den nachfolgenden Beispielen bedeuten Teile Gewichtsteile.

### Beurteilung einer Pigmentpräparation:

Die Bestimmung der Farbstärke und des Farbtons erfolgte nach DIN 55986, indem eine definierte Menge der Pigmentpräparation mit einer Dispersionsfarbe homogenisiert und diese abgetönte Farbe anschließend in definierter Schichtdicke auf eine Lackkarte appliziert wurde. Die koloristischen Eigenschaften des getrockneten Films wurden mit einem Spektralphotometer (z.B. Bench-top Spectralphotometer CM-3700A der Firma Konica Minolta) untersucht.

Für die Bestimmung der Kompatibilität mittels "Rub-Out-Test" wurde die Dispersionsfarbe oder der Lack nach Mischen mit der Pigmentdispersion auf eine Lackkarte aufgetragen. Anschließend wurde mit dem Finger auf dem unteren Teil der Lackkarte nachgerieben. Unverträglichkeit lag vor, wenn die nachgeriebene Fläche kräftiger gefärbt war, als die angrenzende, nicht nachbehandelte Fläche (der "Rub-Out-Test" wird in DE 2 638 946 beschrieben). Zur Beurteilung der Verträglichkeit wurden hierzu sechs konventionelle wässrige und lösemittelhaltige Beschichtungssysteme unterschiedlicher Zusammensetzungen auf Basis unterschiedlicher marktüblicher Bindemittel herangezogen.

Die Viskosität wurde mit einem Kegel-Platte-Viskosimeter (MCR 72) der Firma Anton Paar GmbH bei 20 °C bestimmt (Titankegel: Ø 60 mm, 1°), wobei die Abhängigkeit der Viskosität von dem Schergefälle in einem Bereich zwischen 0 und 200 s⁻¹ untersucht wurde.

Für eine Beurteilung des Schaumverhaltens der Präparation wurde zunächst eine Probe mittels Zentrifuge für 60 Sekunden bei 2000 U/min entlüftet und die Dichte dieser entlüfteten Probe (ρ_{entlüftet}) nach DIN EN ISO 2811-1 mit einem Lackpyknometer (z.B. Modell 290 der Firma Erichsen GmbH & Co. KG) bestimmt. Anschließend wurde die Probe für 3 Minuten in einem 150 mL-HDPE-Becher (75% Füllhöhe) mittels eines Schüttlers (z.B. Disperser DAS 200-K von der Firma Lau GmbH) bei einer Schüttelfrequenz von 660 U/min geschüttelt und die Dichte dieser Probe wiederum wie vorstehend beschrieben bestimmt (ρ_{geschüttelt}). Der Quotient aus den so ermittelten Dichten der geschüttelten sowie entlüfteten Probe ρ_{geschüttelt/}ρ_{entlüftet} sollte >0,90 sein.

Für eine Beurteilung der Lagerstabilität der Dispersionen wurde die Viskosität direkt nach der Herstellung der Präparation gemessen, sowie nach Lagerung für 28 Tage bei 50 °C. Zusätzlich wurde die Farbstärke der so gelagerten Probe gegen eine bei Raumtemperatur gelagerte Probe ermittelt. Zudem wurden die Homogenität sowie das Sedimentationsverhalten der gelagerten Probe durch Ermittlung des gebildeten Bodensatzes sowie Serums bewertet. Die Lagerstabilität wurde als "sehr gut" bewertet, wenn die Viskosität der gelagerten Probe bei einer Scherrate von 60 s⁻¹ um <150 mPa*s von der direkt nach Herstellung gemessenen Viskosität abwich, die Farbstärke der gelagerten Probe gegen die bei Raumtemperatur gelagerte Probe um <3 % abwich und die gelagerte Probe keine Anzeichen von Sedimentation aufwies. Als "gut" wurde die Lagerstabilität bewertet, wenn die Viskosität um 150 - 300 mPa*s abwich und/oder die Farbstärke um 3 - 5 % abwich und/oder die gelagerte Probe leichte Anzeichen von Sedimentation aufwies, sich allerdings durch einfaches Rühren wieder vollständig homogenisieren ließ. Als "schlecht" wurde die Lagerstabilität bewertet, wenn die Viskosität um >600 mPa*s abwich und/oder die Farbstärke um >7 % abwich und/oder die gelagerte Probe stark sedimentierte.

Die Prüfung auf Dosierbarkeit in Abtönmaschinen erfolgte durch das Befüllen des dafür vorgesehenen Farbmittelbehälters der Maschine (z.B. Harbil HA400 der Firma Fast & Fluid) mit 2 - 3 L des Prüfgutes und die Beobachtung der Dosierergebnisse in regelmäßigen Zeitabständen über einen Zeitraum von 4 Wochen nach einer anfänglichen Kalibrierung. Hauptkriterien zur Beurteilung der Eignung waren die Stabilität der Startdichte des Prüfgutes, die Stabilität der Kalibrierung des Prüfgutes auf der Anlage, die erreichbare Präzision und Reproduzierbarkeit bei Dosierversuchen, sowie das visuelle Erscheinungsbild insbesondere hinsichtlich Schaum und Rheologie.

Die in den folgenden Beispielen beschriebenen Pigmentpräparationen wurden nach dem zuvor beschriebenen Verfahren hergestellt, wobei die folgenden Bestandteile in den angegebenen Mengen so verwendet wurden, dass 100 Teile der jeweiligen Pigmentpräparation entstehen. In den nachfolgenden Beispielen bedeuten Teile Gewichtsteile.

### Referenzbeispiel 1

| | | |
|---|---|---|
| 30,0 | Teile | Komponente (A), C.I. Pigment Violet 023 |
| 8,0 | Teile | Komponente (B), Dispergiermittel entsprechend Muster 1 |
| 10,0 | Teile | Komponente (E), Propylenglycol |
| 0,6 | Teile | Komponente (G), Konservierungsmittel |
| Rest | | Komponente (H), Wasser |

Die Pigmentpräparation hat eine durchweg hohe Farbstärke und weist eine breite Kompatibilität ohne Rub-Out sowie ohne Bildung unerwünschter Oberflächendefekte in sechs Beschichtungssystemen unterschiedlicher Zusammensetzungen auf. Die Präparation zeigt eine sehr geringe Schaumneigung (ρ_{geschüttelt}/ρ_{entlüftet} > 0,95). Die Präparation zeigt nach Herstellung ein nahezu newtonsches Rheologieprofil mit einer Viskosität von < 0,1 Pa*s über alle Scherraten im Bereich von 1 - 200 s⁻¹. Die Präparation ist lager- und scherstabil.

### Referenzbeispiel 2

| | | |
|---|---|---|
| 45,0 | Teile | Komponente (A), C.I. Pigment Blue 015:3 |
| 12,0 | Teile | Komponente (B), Dispergiermittel entsprechend Muster 2 |
| 7,5 | Teile | Komponente (E), alpha-Methyl-omega-hydroxy-polyethylenglycolether, mittleres Molekulargewicht 500 g/mol |
| 0,9 | Teile | Komponente (G), Konservierungsmittel |
| Rest | | Komponente (H), Wasser |

Die Pigmentpräparation hat eine durchweg hohe Farbstärke und weist eine breite Kompatibilität ohne Rub-Out sowie ohne Bildung unerwünschter

Oberflächendefekte in sechs Beschichtungssystemen unterschiedlicher Zusammensetzungen auf. Die Präparation zeigt eine sehr geringe Schaumneigung (ρ_{geschüttelt}/ρ_{entlüftet} > 0,95). Die Präparation weist nach Herstellung eine Viskosität von 2,30 Pa*s bei einer Scherrate von 5 s⁻¹, 1,02 Pa*s bei einer Scherrate von 30 s⁻¹ sowie 0,75 Pa*s bei einer Scherrate von 60 s⁻¹ auf. Die Präparation ist lager- und scherstabil.

Die in DE 10 2006 002 800 beschriebenen Pigmentpräparationen auf Basis von C.I. Pigment Blue 015:3 weisen zwar eine Viskosität im gewünschten Bereich auf, allerdings liegt deren Pigmentgehalt lediglich bei 30 Gew.-%. Im Gegensatz hierzu liegt der Pigmentgehalt im voranstehend gezeigten Beispiel 2 bei 45 Gew.-%, was einer Erhöhung des Pigmentgehaltes um 50 % bei gleichbleibend guter Lagerstabilität und Viskosität entspricht.

### Referenzbeispiel 3

| | | |
|---|---|---|
| 40,0 | Teile | Komponente (A), C.I. Pigment Blue 015:1 |
| 13,6 | Teile | Komponente (B), Dispergiermittel entsprechend Muster 2 |
| 9,0 | Teile | Komponente (E), alpha-Methyl-omega-hydroxy-polyethylenglycolether, mittleres Molekulargewicht 500 g/mol |
| 1,0 | Teile | Komponente (G), Entschäumer |
| 0,9 | Teile | Komponente (G), Konservierungsmittel |
| Rest | | Komponente (H), Wasser |

Die Pigmentpräparation hat eine durchweg hohe Farbstärke und weist eine breite Kompatibilität ohne Rub-Out sowie ohne Bildung unerwünschter Oberflächendefekte in sechs Beschichtungssystemen unterschiedlicher Zusammensetzungen auf. Die Präparation zeigt eine sehr geringe Schaumneigung (ρ_{geschüttelt}/ρ_{entlüftet} > 0,95). Die Präparation weist nach Herstellung eine Viskosität von 1,37 Pa*s bei einer Scherrate von 5 s⁻¹, 0,67 Pa*s bei einer Scherrate von 30 s⁻¹ sowie 0,51 Pa*s bei einer Scherrate von 60 s⁻¹ auf. Die Präparation ist lager- und scherstabil. Auf Abtönmaschinen ist die Pigmentpräparation gut dosierbar und über einen Zeitraum von 4 Wochen stabil.

### Referenzbeispiel 4

| | | |
|---|---|---|
| 50,0 | Teile | Komponente (A), C.I. Pigment Green 007 |
| 7,2 | Teile | Komponente (B), Dispergiermittel entsprechend Muster 2 |
| 0,7 | Teile | Komponente (D), Natriumsalz eines carboxymethylierten Alkoholpolyglycolethers |
| 10,0 | Teile | Komponente (E), alpha-Methyl-omega-hydroxy-polyethylenglycolether, mittleres Molekulargewicht 500 g/mol |
| 1,0 | Teile | Komponente (G), Entschäumer |
| 0,9 | Teile | Komponente (G), Konservierungsmittel |
| Rest | | Komponente (H), Wasser |

Die Pigmentpräparation hat eine durchweg hohe Farbstärke und weist eine breite Kompatibilität ohne Rub-Out sowie ohne Bildung unerwünschter Oberflächendefekte in sechs Beschichtungssystemen unterschiedlicher Zusammensetzungen auf. Die Präparation zeigt eine sehr geringe Schaumneigung (ρ_{geschüttelt}/ρ_{entlüftet} > 0,95). Die Präparation weist nach Herstellung eine Viskosität von 0,81 Pa*s bei einer Scherrate von 5 s⁻¹, 0,54 Pa*s bei einer Scherrate von 30 s⁻¹ sowie 0,45 Pa*s bei einer Scherrate von 60 s⁻¹ auf. Die Präparation ist lager- und scherstabil.

### Referenzbeispiel 5

| | | |
|---|---|---|
| 41,0 | Teile | Komponente (A), C.I. Pigment Yellow 074 |
| 9,6 | Teile | Komponente (B), Dispergiermittel entsprechend Muster 2 |
| 0,2 | Teile | Komponente (D), Cetyltrimethylammoniumchlorid |
| 11,0 | Teile | Komponente (E), alpha-Methyl-omega-hydroxy-polyethylenglycolether, mittleres Molekulargewicht 500 g/mol |
| 0,9 | Teile | Komponente (G), Konservierungsmittel |
| Rest | | Komponente (H), Wasser |

Die Pigmentpräparation hat eine durchweg hohe Farbstärke und weist eine breite Kompatibilität ohne Rub-Out sowie ohne Bildung unerwünschter Oberflächendefekte in sechs Beschichtungssystemen unterschiedlicher Zusammensetzungen auf. Die Präparation zeigt eine sehr geringe Schaumneigung (ρ_{geschüttelt}/ρ_{entlüftet} > 0,95). Die Präparation weist nach Herstellung eine Viskosität von 0,80 Pa*s bei einer Scherrate von 5 s⁻¹, 0,28 Pa*s bei einer Scherrate von 30 s⁻¹ sowie 0,18 Pa*s bei einer Scherrate von 60 s⁻¹ auf. Die Präparation ist lager- und scherstabil. Auf Abtönmaschinen ist die Pigmentpräparation gut dosierbar und über einen Zeitraum von 4 Wochen stabil.

### Referenzbeispiel 6

| | | |
|---|---|---|
| 38,0 | Teile | Komponente (A), C.I. Pigment Yellow 097 |
| 8,0 | Teile | Komponente (B), Dispergiermittel entsprechend Muster 2 |
| 10,0 | Teile | Komponente (E), alpha-Methyl-omega-hydroxy-polyethylenglycolether, mittleres Molekulargewicht 500 g/mol |
| 2,0 | Teile | Komponente (G), Ölsäure |
| 1,0 | Teile | Komponente (G), Entschäumer |
| 0,9 | Teile | Komponente (G), Konservierungsmittel |
| Rest | | Komponente (H), Wasser |

Die Pigmentpräparation hat eine durchweg hohe Farbstärke und weist eine breite Kompatibilität ohne Rub-Out sowie ohne Bildung unerwünschter Oberflächendefekte in sechs Beschichtungssystemen unterschiedlicher Zusammensetzungen auf. Die Präparation zeigt eine sehr geringe Schaumneigung (ρ_{geschüttelt}/ρ_{entlüftet} > 0,95). Die Präparation weist nach Herstellung eine Viskosität von 0,74 Pa*s bei einer Scherrate von 5 s⁻¹, 0,28 Pa*s bei einer Scherrate von 30 s⁻¹ sowie 0,19 Pa*s bei einer Scherrate von 60 s⁻¹ auf. Die Präparation ist lager- und scherstabil.

### Referenzbeispiel 7

| | | |
|---|---|---|
| 62,0 | Teile | Komponente (A), C.I. Pigment Blue 028 |
| 3,2 | Teile | Komponente (B), Dispergiermittel entsprechend Muster 2 |
| 0,5 | Teile | Komponente (D), Benzolsulfonsäure, 4-C 10-13-sec-Alkylderivate |
| 0,8 | Teile | Komponente (D), Tetranatrium-N-(1,2-Dicarboxyethyl)-N-Octadecylsulfosuccinamat |
| 5,0 | Teile | Komponente (D), Fettalkoholpolyglycolether |
| 5,0 | Teile | Komponente (E), Ethylenoxid-Propylenoxid-Mischpolymerisat |
| | (verzweigt) | |
| 2,0 | Teile | Komponente (G), Ölsäure |
| 0,9 | Teile | Komponente (G), Konservierungsmittel |
| Rest | | Komponente (H), Wasser |

Die Pigmentpräparation hat eine durchweg hohe Farbstärke und weist eine breite Kompatibilität ohne Rub-Out sowie ohne Bildung unerwünschter Oberflächendefekte in sechs Beschichtungssystemen unterschiedlicher Zusammensetzungen auf. Die Präparation zeigt eine sehr geringe Schaumneigung (ρ_{geschüttelt}/ρ_{entlüftet} > 0,95). Die Präparation weist nach Herstellung eine Viskosität von 4,84 Pa*s bei einer Scherrate von 5 s⁻¹, 1,95 Pa*s bei einer Scherrate von 30 s⁻¹ sowie 1,23 Pa*s bei einer Scherrate von 60 s⁻¹ auf. Die Präparation ist lager- und scherstabil.

### Beispiel 8

| | | |
|---|---|---|
| 41,0 | Teile | Komponente (A), C.I. Pigment Yellow 074 |
| 11,5 | Teile | Komponente (B), Dispergiermittel entsprechend Muster 3 |
| 0,2 | Teile | Komponente (D), Cetyltrimethylammoniumchlorid |
| 11,0 | Teile | Komponente (E), alpha-Methyl-omega-hydroxy-polyethylenglycolether, mittleres Molekulargewicht 500 g/mol |
| 0,9 | Teile | Komponente (G), Konservierungsmittel |
| Rest | | Komponente (H), Wasser |

Die Pigmentpräparation hat eine durchweg hohe Farbstärke und weist eine breite Kompatibilität ohne Rub-Out sowie ohne Bildung unerwünschter Oberflächendefekte in sechs Beschichtungssystemen unterschiedlicher Zusammensetzungen auf. Die Präparation zeigt eine sehr geringe Schaumneigung (ρ_{geschüttelt}/ρ_{entlüftet} > 0,95). Die Präparation weist nach Herstellung eine Viskosität von 4,10 Pa*s bei einer Scherrate von 5 s⁻¹, 0,62 Pa*s bei einer Scherrate von 30 s⁻¹ sowie 0,46 Pa*s bei einer Scherrate von 60 s⁻¹ auf. Die Präparation ist lager- und scherstabil.

### Beispiel 9

| | | |
|---|---|---|
| 40,0 | Teile | Komponente (A), C.I. Pigment Blue 015:3 |
| 8,0 | Teile | Komponente (B), Dispergiermittel entsprechend Muster 3 |
| 10,0 | Teile | Komponente (E), Propylenglycol |
| 0,6 | Teile | Komponente (F), Konservierungsmittel |
| Rest | | Komponente (G), Wasser |

Die Pigmentpräparation hat eine durchweg hohe Farbstärke und weist eine breite Kompatibilität ohne Rub-Out sowie ohne Bildung unerwünschter Oberflächendefekte in sechs Beschichtungssystemen unterschiedlicher Zusammensetzungen auf. Die Präparation zeigt eine sehr geringe Schaumneigung (ρ_{geschüttelt}/ρ_{entlüftet} > 0,95). Die Präparation weist nach Herstellung eine Viskosität von 1,90 Pa*s bei einer Scherrate von 5 s⁻¹, 0,43 Pa*s bei einer Scherrate von 30 s⁻¹ sowie 0,28 Pa*s bei einer Scherrate von 60 s⁻¹ auf. Die Präparation ist lager- und scherstabil.

Die in DE 10 2006 002 800 beschriebenen Pigmentpräparationen auf Basis von C.I. Pigment Blue 015:3 weisen zwar eine Viskosität im gewünschten Bereich auf, allerdings liegt deren Pigmentgehalt lediglich bei 30 Gew.-%. Im Gegensatz hierzu liegt der Pigmentgehalt im voranstehend gezeigten Beispiel 9 bei 40 Gew.-%, was einer Erhöhung des Pigmentgehaltes um >33 % bei gleichbleibend guter Lagerstabilität und Viskosität entspricht.

### Beispiel 10

| | | |
|---|---|---|
| 30,0 | Teile | Komponente (A), C.I. Pigment Red 254 |
| 6,0 | Teile | Komponente (B), Dispergiermittel entsprechend Muster 4 |
| 1,5 | Teile | Komponente (D), Cocoamidopropylbetain |
| 5,0 | Teile | Komponente (D), Fettalkoholpolyglycolether |
| 12,5 | Teile | Komponente (E), alpha-Methyl-omega-hydroxy-polyethylenglycolether, mittleres Molekulargewicht 500 g/mol |
| 2,0 | Teile | Komponente (G), Ölsäure |
| 1,0 | Teile | Komponente (G), Konservierungsmittel |
| Rest | | Komponente (H), Wasser |

Die Pigmentpräparation hat eine durchweg hohe Farbstärke und weist eine breite Kompatibilität ohne Rub-Out sowie ohne Bildung unerwünschter Oberflächendefekte in sechs Beschichtungssystemen unterschiedlicher Zusammensetzungen auf. Die Präparation zeigt eine sehr geringe Schaumneigung (ρ_{geschüttelt}/ρ_{entlüftet} > 0,95). Die Präparation weist nach Herstellung eine Viskosität von 0,42 Pa*s bei einer Scherrate von 5 s⁻¹, 0,35 Pa*s bei einer Scherrate von 30 s⁻¹ sowie 0,31 Pa*s bei einer Scherrate von 60 s⁻¹ auf. Die Präparation ist lager- und scherstabil.

### Beispiel 11

| | | |
|---|---|---|
| 41,0 | Teile | Komponente (A), C.I. Pigment Yellow 074 |
| 11,5 | Teile | Komponente (B), Dispergiermittel entsprechend Muster 4 |
| 11,0 | Teile | Komponente (E), alpha-Methyl-omega-hydroxy-polyethylenglycolether, mittleres Molekulargewicht 500 g/mol |
| 0,9 | Teile | Komponente (G), Konservierungsmittel |
| Rest | | Komponente (H), Wasser |

Die Pigmentpräparation hat eine durchweg hohe Farbstärke und weist eine breite Kompatibilität ohne Rub-Out sowie ohne Bildung unerwünschter Oberflächendefekte in sechs Beschichtungssystemen unterschiedlicher Zusammensetzungen auf. Die Präparation zeigt eine sehr geringe Schaumneigung (ρ_{geschüttelt}/ρ_{entlüftet} > 0,95). Die Präparation weist nach Herstellung eine Viskosität von 1,67 Pa*s bei einer Scherrate von 5 s⁻¹, 0,44 Pa*s bei einer Scherrate von 30 s⁻¹ sowie 0,28 Pa*s bei einer Scherrate von 60 s⁻¹ auf. Die Präparation ist lager- und scherstabil.

### Beispiel 12

| | | |
|---|---|---|
| 43,0 | Teile | Komponente (A), C.I. Pigment Black 007 |
| 18,0 | Teile | Komponente (B), Dispergiermittel entsprechend Muster 4 |
| 0,3 | Teile | Komponente (D), Sulfobernsteinsäure-Diester Natriumsalz |
| 8,0 | Teile | Komponente (E), alpha-Methyl-omega-hydroxy-polyethylenglycolether, mittleres Molekulargewicht 500 g/mol |
| 0,9 | Teile | Komponente (G), Konservierungsmittel |
| Rest | | Komponente (H), Wasser |

Die Pigmentpräparation hat eine durchweg hohe Farbstärke und weist eine breite Kompatibilität ohne Rub-Out sowie ohne Bildung unerwünschter Oberflächendefekte in sechs Beschichtungssystemen unterschiedlicher Zusammensetzungen auf. Die Präparation zeigt eine sehr geringe Schaumneigung (ρ_{geschüttelt}/ρ_{entlüftet} > 0,95). Die Präparation weist nach Herstellung eine Viskosität von 1,85 Pa*s bei einer Scherrate von 5 s⁻¹, 0,82 Pa*s bei einer Scherrate von 30 s⁻¹ sowie 0,62 Pa*s bei einer Scherrate von 60 s⁻¹ auf. Die Präparation ist lager- und scherstabil.

Die in DE 10 2006 002 800 beschriebene Pigmentpräparation auf Basis von C.I. Pigment Black 007 weist zwar eine Viskosität im gewünschten Bereich auf, allerdings liegt deren Pigmentgehalt lediglich bei 25 Gew.-%. Im Gegensatz hierzu liegt der Pigmentgehalt im voranstehend gezeigten Beispiel 12 bei 43 Gew.-%, was einer Erhöhung des Pigmentgehaltes um 72 % bei dennoch guter Lagerstabilität und Viskosität entspricht.

### Beispiel 13

| | | |
|---|---|---|
| 70,0 | Teile | Komponente (A), C.I. Pigment Red 101 |
| 5,0 | Teile | Komponente (B), Dispergiermittel entsprechend Muster 4 |
| 5,0 | Teile | Komponente (D), Fettalkoholpolyglycolether |
| 5,0 | Teile | Komponente (E), Ethylenoxid-Propylenoxid-Mischpolymerisat (verzweigt) |
| 2,0 | Teile | Komponente (G), Ölsäure |
| 0,9 | Teile | Komponente (G), Konservierungsmittel |
| Rest | | Komponente (H), Wasser |

Die Pigmentpräparation hat eine durchweg hohe Farbstärke und weist eine breite Kompatibilität ohne Rub-Out sowie ohne Bildung unerwünschter Oberflächendefekte in sechs Beschichtungssystemen unterschiedlicher Zusammensetzungen auf. Die Präparation zeigt eine sehr geringe Schaumneigung (ρ_{geschüttelt}/ρ_{entlüftet} > 0,95). Die Präparation weist nach Herstellung eine Viskosität von 6,83 Pa*s bei einer Scherrate von 5 s⁻¹, 2,94 Pa*s bei einer Scherrate von 30 s⁻¹ sowie 2,55 Pa*s bei einer Scherrate von 60 s⁻¹ auf. Die Präparation ist lager- und scherstabil.

Die in DE 10 2006 002 800 beschriebene Pigmentpräparation auf Basis von C.I. Pigment Red 102 weist zwar eine Viskosität im gewünschten Bereich auf, allerdings liegt deren Pigmentgehalt lediglich bei 60 Gew.-%. Im Gegensatz hierzu liegt der Pigmentgehalt im voranstehend gezeigten Beispiel 13 bei 70 Gew.-%, was einer Erhöhung des Pigmentgehaltes um >16 % bei dennoch guter Lagerstabilität und Viskosität entspricht.

### Vergleichsbeispiel 1

| | | |
|---|---|---|
| 41,0 | Teile | Komponente (A), C.I. Pigment Yellow 074 |
| 10,0 | Teile | Komponente (B), Dispergiermittel entsprechend Vergleichsmuster 1 |
| 0,2 | Teile | Komponente (D), Cetyltrimethylammoniumchlorid |
| 11,0 | Teile | Komponente (E), alpha-Methyl-omega-hydroxy-polyethylenglycolether, mittleres Molekulargewicht 500 g/mol |
| 0,9 | Teile | Komponente (G), Konservierungsmittel |
| Rest | | Komponente (H), Wasser |

Die Pigmentpräparation hat eine geringe Farbstärke. Verglichen mit Beispiel 5 liegt die Farbstärke lediglich bei 80 %. Der Rub-Out-Test zeigt eine Unverträglichkeit in zwei von sechs Beschichtungssystemen. Die Präparation ist nicht lagerstabil, da die Farbstärke nach Lagerung für 28 Tage bei 50 °C auf 88 % verglichen mit der Farbstärke vor Lagerung gesunken ist. Dies lässt sich auf eine unzureichende Pigmentbenetzung und -stabilisierung zurückführen.

### Vergleichsbeispiel 2

| | | |
|---|---|---|
| 45,0 | Teile | Komponente (A), C.I. Pigment Blue 015:3 |
| 12,0 | Teile | Komponente (B), Dispergiermittel entsprechend Vergleichsmuster 1 |
| 7,5 | Teile | Komponente (E), alpha-Methyl-omega-hydroxy-polyethylenglycolether, mittleres Molekulargewicht 500 g/mol |
| 0,9 | Teile | Komponente (G), Konservierungsmittel |
| Rest | | Komponente (H), Wasser |

Die Pigmentpräparation hat eine geringe Farbstärke. Verglichen mit Referenzbeispiel 2 liegt die Farbstärke lediglich bei 94 %. Der Rub-Out-Test zeigt eine starke Unverträglichkeit in zwei und eine leichte Unverträglichkeit in einem von insgesamt sechs Beschichtungssystemen. Die Viskosität beträgt 8,10 Pa*s bei einer Scherrate von 5 s⁻¹, 2,21 Pa*s bei einer Scherrate von 30 s⁻¹ und 1,52 Pa*s bei einer Scherrate von 60 s⁻¹, verglichen mit einer Viskosität von 2,30 Pa*s bei einer Scherrate von 5 s⁻¹, 1,02 Pa*s bei einer Scherrate von 30 s⁻¹ und 0,75 Pa*s bei einer Scherrate von 60 s⁻¹ in Referenzbeispiel 2.

Dies lässt sich auf eine unzureichende Viskositätsreduktion und Partikelstabilisierung zurückführen.

### Vergleichsbeispiel 3

| | | |
|---|---|---|
| 30,0 | Teile | Komponente (A), C.I. Pigment Violet 023 |
| 8,0 | Teile | Komponente (B), Dispergiermittel entsprechend Vergleichsmuster 1 |
| 10,0 | Teile | Komponente (E), Propylenglycol |
| 0,6 | Teile | Komponente (G), Konservierungsmittel |
| Rest | | Komponente (H), Wasser |

Die Pigmentpräparation hat eine sehr geringe Farbstärke. Verglichen mit Referenzbeispiel 1 liegt die Farbstärke lediglich bei 90 %.

| Beispiel | C.I. | Pigmentgehalt [Gew.-%] | Farbstärke | Viskosität bei 5 s⁻¹ [Pa*s] | Viskosität bei 30 s⁻¹ [Pa*s] | Viskosität bei 60 s⁻¹ [Pa*s] | Kompatibilität mit Bindemittelsystemen | Schaumverhalten / ρ_{geschüttelt}/ρ_{entlüftet} | Lagerstabilität |
|---|---|---|---|---|---|---|---|---|---|
| 1* | Pigment Violet 023 | 30 | sehr gut | < 0,1 | < 0,1 | < 0,1 | kein Rub-Out und keine Oberflächendefekte in 6 Systemen | sehr gut / >0,95 | sehr gut |
| 2* | Pigment Blue 015:3 | 45 | sehr gut | 2,30 | 1,02 | 0,75 | kein Rub-Out und keine Oberflächendefekte in 6 Systemen | sehr gut / >0,95 | sehr gut |
| 3* | Pigment Blue 015:1 | 40 | sehr gut | 1,37 | 0,67 | 0,51 | kein Rub-Out und keine Oberflächendefekte in 6 Systemen | sehr gut / >0,95 | sehr gut |
| 4* | Pigment Green 007 | 50 | sehr gut | 0,81 | 0,54 | 0,45 | kein Rub-Out und keine Oberflächendefekte in 6 Systemen | sehr gut / >0,95 | sehr gut |
| 5* | Pigment Yellow 074 | 41 | sehr gut | 0,80 | 0,28 | 0,18 | kein Rub-Out und keine Oberflächendefekte in 6 Systemen | sehr gut / >0,95 | gut |
| 6* | Pigment Yellow 097 | 38 | sehr gut | 0,74 | 0,28 | 0,19 | kein Rub-Out und keine Oberflächendefekte in 6 Systemen | sehr gut / >0,95 | sehr gut |

| | | | | | | | | | |
|---|---|---|---|---|---|---|---|---|---|
| * Referenzbeispiel | | | | | | | | | |

| | | | | | | | | | |
|---|---|---|---|---|---|---|---|---|---|
| 7* | Pigment Blue 028 | 62 | sehr gut | 4,84 | 1,95 | 1,23 | kein Rub-Out und keine Oberflächendefekte in 6 Systemen | sehr gut / >0,95 | gut |
| 8 | Pigment Yellow 074 | 41 | sehr gut | 4,10 | 0,62 | 0,46 | kein Rub-Out und keine Oberflächendefekte in 6 Systemen | sehr gut / >0,95 | sehr gut |
| 9 | Pigment Blue 015:3 | 40 | sehr gut | 1,90 | 0,43 | 0,28 | kein Rub-Out und keine Oberflächendefekte in 6 Systemen | sehr gut / >0,95 | sehr gut |
| 10 | Pigment Red 254 | 30 | sehr gut | 0,42 | 0,35 | 0,31 | kein Rub-Out und keine Oberflächendefekte in 6 Systemen | sehr gut / >0,95 | sehr gut |
| 11 | Pigment Yellow 074 | 41 | sehr gut | 1,67 | 0,44 | 0,28 | kein Rub-Out und keine Oberflächendefekte in 6 Systemen | sehr gut / >0,95 | sehr gut |
| 12 | Pigment Black 007 | 43 | sehr gut | 1,85 | 0,82 | 0,62 | kein Rub-Out und keine Oberflächendefekte in 6 Systemen | sehr gut / >0,95 | sehr gut |
| 13 | Pigment Red 101 | 70 | sehr gut | 6,83 | 2,94 | 2,55 | kein Rub-Out und keine Oberflächendefekte in 6 Systemen | sehr gut / >0,95 | sehr gut |

| | | | | | | | | | |
|---|---|---|---|---|---|---|---|---|---|
| * Referenzbeispiel | | | | | | | | | |

| | | | | | | | | | |
|---|---|---|---|---|---|---|---|---|---|
| Vergl. 1 | Pigment Yellow 074 | 41 | 80 % vs. Bsp. 5 | n.b. | n.b. | 0,11 | Starker Rub-Out in 2 von 6 Systemen | n.b. | schlecht, Farbstärkeverlust von 12 % nach Lagerung |
| Vergl. 2 | Pigment Blue 015:3 | 45 | 94 % vs. Bsp. 2 | 8,10 | 2,21 | 1,52 | Starker Rub-Out in 2 und leichter Rub-Out in einem von insgesamt 6 Systemen | n.b. | gut |
| Vergl. 3 | Pigment Violet 023 | 30 | 90 % vs. Bsp. 1 | < 0,1 | < 0,1 | < 0,1 | kein Rub-Out in 6 Systemen | n.b. | n.b. |

## Patentansprüche

1. Verwendung einer Pigmentpräparation zum Pigmentieren natürlicher oder synthetischer Materialien wobei die Pigmentpräparation
(A) mindestens ein organisches und/oder anorganisches Pigment und/oder Füllstoff
(B) mindestens ein Dispergiermittel der Formel (I) oder (II), oder Mischungen der Dispergiermittel der Formeln (I) und (II), 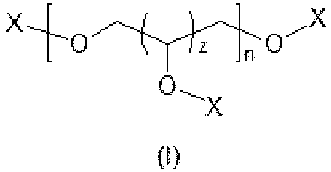 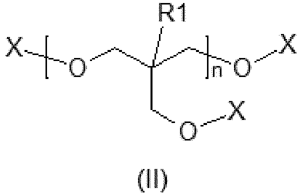
wobei
n eine ganze Zahl größer oder gleich 1,
z eine ganze Zahl größer oder gleich 1,
R1 ein aliphatischer, linearer oder verzweigter Kohlenwasserstoffrest mit 1 bis 30 Kohlenstoffatomen oder ein Wasserstoffatom oder die Struktureinheit -O-X oder die Struktureinheit -CH₂-O-X ist,
und Struktureinheit X der Formel (III) entspricht 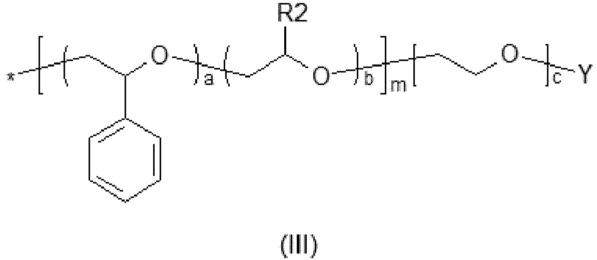 worin
a eine ganze Zahl von 1 bis 50, bevorzugt 1 bis 20, besonders bevorzugt 1 bis 10,
b eine ganze Zahl von 0 bis 50, bevorzugt 0 bis 20, besonders bevorzugt 0 bis 10,
c eine ganze Zahl von 1 bis 100, bevorzugt 10 bis 50,
m eine ganze Zahl von 1 bis 50, bevorzugt 1 bis 10,
R2 ein aliphatischer, linearer oder verzweigter Kohlenwasserstoffrest mit 1 bis 30 Kohlenstoffatomen,
Y -SO₃M, -SO₂M, -PO₃M₂, -CH₂COOM und
M Wasserstoff oder ein Kation ist, vorzugsweise aus der Gruppe Na⁺, K⁺, NH₄⁺, Triethanolammonium, oder eine Kombination davon,
und Wasser enthält,
wobei die Pigmentpräparation in einem Tönsystem als farbgebende Komponente eingesetzt wird, und worin die Einfärbung einer Abtönbasis, bei der es sich um ein in weißer oder transparenter oder bunter Form vorliegendes flüssiges Bindemittelsystem handelt, durch softwaregesteuerte Dosierung der Pigmentpräparation erreicht wird.

2. Verwendung nach Anspruch 1, **dadurch gekennzeichnet, dass**
(C) ein oder mehrere Netzmittel,
(D) und/oder weitere Tenside und/oder Dispergiermittel,
(E) und/oder ein oder mehrere hydrotrope Substanzen und/oder ein oder mehrere organische Lösemittel und/oder Mischungen daraus,
(F) und/oder ein oder mehrere Bindemittel und/oder Co-Bindemittel,
(G) und/ oder weitere zur Herstellung wässriger Pigmentdispersionen übliche Zusatzstoffe, und
(H) gegebenenfalls Wasser
zur Anwendung kommen.

3. Verwendung nach Anspruch 1 und/oder 2, wobei 5 bis 80 Gew.-% der Komponente (A) enthalten sind.

4. Verwendung nach mindestens einem der vorhergehenden Ansprüche, wobei 0,1 bis 30 Gew.-% der Komponente (B) enthalten sind.

5. Verwendung nach mindestens einem der vorhergehenden Ansprüche, **gekennzeichnet durch** folgende Zusammensetzung der Komponenten (A) bis (H):
(A) 5 bis 80 Gew.-%, insbesondere 10 bis 70 Gew.-%,
(B) 0,1 bis 30 Gew.-%, insbesondere 2 bis 20 Gew.-%,
(C) 0 bis 10 Gew.-%, insbesondere 0,1 bis 5 Gew.-%,
(D) 0 bis 20 Gew.-%, insbesondere 1 bis 10 Gew.-%,
(E) 0 bis 30 Gew.-%, insbesondere 5 bis 20 Gew.-%,
(F) 0 bis 30 Gew.-%, insbesondere 1 bis 10 Gew.-%,
(G) 0 bis 20 Gew.-%, insbesondere 0,1 bis 5 Gew.-%,
(H) Rest Wasser,
jeweils bezogen auf das Gesamtgewicht (100 Gew.-%) der Pigmentpräparation.

6. Verwendung nach mindestens einem der vorhergehenden Ansprüche, **dadurch gekennzeichnet, dass** das organische Pigment von Komponente (A) ein Monoazo-, Disazo-, verlacktes Azo-,
β-Naphthol-, Naphthol AS-, Benzimidazolon-, Disazokondensations-, Azo-Metallkomplex-Pigmente oder ein polycyclisches Pigment aus der Gruppe der Phthalocyanin-, Chinacridon-, Perylen-, Perinon-, Thioindigo-, Anthanthron-, Anthrachinon-, Flavanthron-, Indanthron-, Isoviolanthron-, Pyranthron-, Dioxazin-, Chinophthalon-, Isoindolinon-, Isoindolin- und Diketopyrrolopyrrol-Pigmente oder ein Ruß ist.

7. Verwendung nach mindestens einem der vorhergehenden Ansprüche, **dadurch gekennzeichnet, dass** es sich bei den Struktureinheiten (I) und (II) der Komponente (B) um Umsetzungsprodukte aus alkoxylierbaren drei- oder höherwertigen Polyolen handelt, vorzugsweise Diglycerin, Erythrit, Glycerin, Pentaerythrit, Polyglycerine, Sorbit, Trimethylolpropan oder Xylitol.

8. Verwendung nach mindestens einem der vorhergehenden Ansprüche, **dadurch gekennzeichnet, dass** die Pigmentpräparation eine Viskosität von kleiner 10,0 Pa*s bei einer Scherrate von 5s⁻¹ besitzt.

9. Verwendung nach mindestens einem der vorhergehenden Ansprüche, **dadurch gekennzeichnet, dass** die Pigmentpräparation einen pH-Wert im Bereich von 4-14 besitzt.

10. Verwendung nach mindestens einem der vorhergehenden Ansprüche, **dadurch gekennzeichnet, dass** das natürliche oder synthetische Material ein Putz oder ein Beton ist.

## Claims

1. Use of a pigment preparation for pigmenting natural or synthetic materials, the pigment preparation comprising
(A) at least one organic and/or inorganic pigment and/or filler
(B) at least one dispersant of the formula (I) or (II), or mixtures of the dispersants of the formulae (I) and (II), 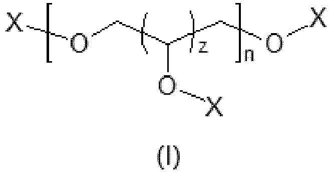 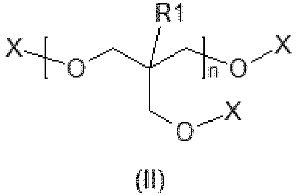
where
n is an integer greater than or equal to 1,
z is an integer greater than or equal to 1,
R1 is an aliphatic, linear or branched hydrocarbon radical having 1 to 30 carbon atoms, or a hydrogen atom, or the structural unit -O-X or the structural unit -CH₂-O-X,
and structural unit X corresponds to the formula (III) 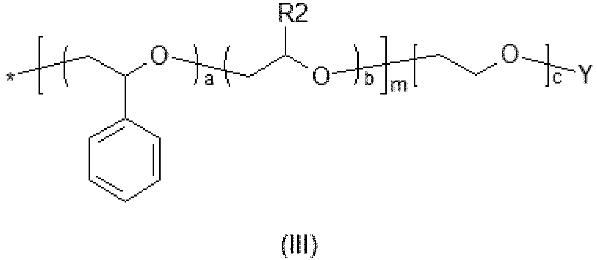 in which
a is an integer from 1 to 50, preferably 1 to 20, more preferably 1 to 10,
b is an integer from 0 to 50, preferably 0 to 20, more preferably 0 to 10,
c is an integer from 1 to 100, preferably 10 to 50,
m is an integer from 1 to 50, preferably 1 to 10,
R2 is an aliphatic, linear or branched hydrocarbon radical having 1 to 30 carbon atoms,
Y is -SO₃M, -SO₂M, -PO₃M₂, -CH₂COOM, and
M is hydrogen or a cation, preferably from the group of Na⁺, K⁺, NH₄⁺,
triethanolammonium, or a combination thereof,
and water,
where the pigment preparation is used in a tinting system as a colouring component, and wherein the colouring of a tinting base, which is a liquid binder system present in white or transparent or chromatic form, is achieved by software-controlled metering of the pigment preparation.

2. Use according to Claim 1, **characterized in that**
(C) one or more wetting agents,
(D) and/or further surfactants and/or dispersants,
(E) and/or one or more hydrotropic substances and/or one or more organic solvents and/or mixtures thereof,
(F) and/or one or more binders and/or cobinders,
(G) and/or further adjuvants customary for producing aqueous pigment dispersions, and
(H) optionally water
are employed.

3. Use according to Claim 1 and/or 2, where 5 to 80 wt% of component (A) is present.

4. Use according to at least one of the preceding claims, where 0.1 to 30 wt% of component (B) is present.

5. Use according to at least one of the preceding claims, **characterized by** the following composition of components (A) to (H):
(A) 5 to 80 wt%, more particularly 10 to 70 wt%,
(B) 0.1 to 30 wt%, more particularly 2 to 20 wt%,
(C) 0 to 10 wt%, more particularly 0.1 to 5 wt%,
(D) 0 to 20 wt%, more particularly 1 to 10 wt%,
(E) 0 to 30 wt%, more particularly 5 to 20 wt%,
(F) 0 to 30 wt%, more particularly 1 to 10 wt%,
(G) 0 to 20 wt%, more particularly 0.1 to 5 wt%,
(H) balance water,
based in each case on the total weight (100 wt%) of the pigment preparation.

6. Use according to at least one of the preceding claims, **characterized in that** the organic pigment of component (A) is a monoazo, disazo, laked azo, β-naphthol, naphthol AS, benzimidazolone, disazo condensation or azo-metal complex pigments or a polycyclic pigment from the group of the phthalocyanine, quinacridone, perylene, perinone, thioindigo, anthanthrone, anthraquinone, flavanthrone, indanthrone, isoviolanthrone, pyranthrone, dioxazine, quinophthalone, isoindolinone, isoindoline and diketopyrrolopyrrole pigments or a carbon black.

7. Use according to at least one of the preceding claims, **characterized in that** the structural units (I) and (II) of component (B) are reaction products of alkoxylatable polyols with a hydricity of three or higher, preferably diglycerol, erythritol, glycerol, pentaerythritol, polyglycerols, sorbitol, trimethylolpropane or xylitol.

8. Use according to at least one of the preceding claims, **characterized in that** the pigment preparation possesses a viscosity of less than 10.0 Pa*s at a shear rate of 5 s⁻¹.

9. Use according to at least one of the preceding claims, **characterized in that** the pigment preparation possesses a pH in the range of 4-14.

10. Use according to at least one of the preceding claims, **characterized in that** the natural or synthetic material is a render or a concrete.

## Revendications

1. Utilisation d'une préparation de pigment pour la pigmentation de matériaux naturels ou synthétiques, la préparation de pigment contenant
(A) au moins un(e) pigment et/ou charge organique et/ou inorganique
(B) au moins un agent de dispersion de formule (I) ou (II), ou des mélanges des agents de dispersion de formule (I) et (II), 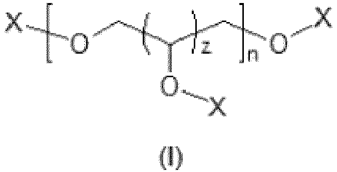 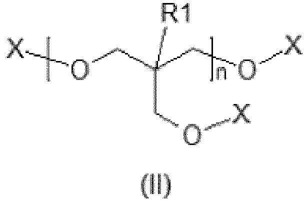
n étant un nombre entier supérieur ou égal à 1,
z étant un nombre entier supérieur ou égal à 1,
R1 étant un radical hydrocarboné linéaire ou ramifié, aliphatique comportant 1 à 30 atomes de carbone ou un atome d'hydrogène ou le motif structural -O-X ou le motif structural -CH₂-O-X,
et le motif structural X correspondant à la formule (III) 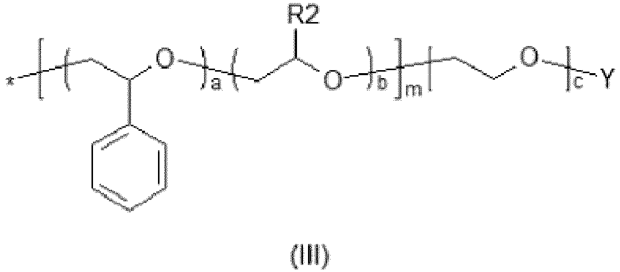
dans laquelle
a est un nombre entier de 1 à 50, préférablement 1 à 20, particulièrement préférablement 1 à 10,
b est un nombre entier de 0 à 50, préférablement 0 à 20, particulièrement préférablement 0 à 10,
c est un nombre entier de 1 à 100, préférablement 10 à 50,
m est un nombre entier de 1 à 50, préférablement 1 à 10,
R2 est un radical hydrocarboné linéaire ou ramifié, aliphatique comportant 1 à 30 atomes de carbone,
Y est -SO₃M, -SO₂M, -PO₃M₂, -CH₂COOM et
M est hydrogène ou un cation, de préférence du groupe composé par Na⁺, K⁺, NH₄⁺, triéthanolammonium, ou une combinaison correspondante,
et de l'eau,
la préparation de pigment étant utilisée dans un système de teinte en tant que composant conférant une couleur, et dans laquelle la coloration d'une base de teinture, qui est un système de liant liquide présent sous forme blanche ou transparente ou colorée, est atteinte par ajout commandé par un logiciel de la préparation de pigment.

2. Utilisation selon la revendication 1, **caractérisée en ce que**
(C) un ou plusieurs agents mouillants,
(D) et/ou d'autres tensioactifs et/ou agents de dispersion,
(E) et/ou une ou plusieurs substances hydrotropes et/ou un ou plusieurs solvants organiques et/ou des mélanges correspondants,
(F) et/ou un ou plusieurs liants et/ou co-liants,
(G) et/ou d'autres additifs habituels dans la préparation de dispersions aqueuses de pigment, et
(H) éventuellement de l'eau
sont appliqués.

3. Utilisation selon la revendication 1 et/ou 2, 5 à 80 % en poids du composant (A) étant contenus.

4. Utilisation selon au moins l'une quelconque des revendications précédentes, 0,1 à 30 % en poids du composant (B) étant contenus.

5. Utilisation selon au moins l'une quelconque des revendications précédentes, **caractérisée par** la composition suivante des composants (A) à (H) :
(A) 5 à 80 % en poids, en particulier 10 à 70 % en poids,
(B) 0,1 à 30 % en poids, en particulier 2 à 20 % en poids,
(C) 0 à 10 % en poids, en particulier 0,1 à 5 % en poids,
(D) 0 à 20 % en poids, en particulier 1 à 10 % en poids,
(E) 0 à 30 % en poids, en particulier 5 à 20 % en poids,
(F) 0 à 30 % en poids, en particulier 1 à 10 % en poids,
(G) 0 à 20 % en poids, en particulier 0,1 à 5 % en poids,
(H) le reste étant de l'eau,
à chaque fois par rapport au poids total (100 % en poids) de la préparation de pigment.

6. Utilisation selon au moins l'une quelconque des revendications précédentes, **caractérisée en ce que** le pigment organique du composant (A) est un pigment monoazoïque, disazoïque, azoïque vernis, de β-naphtol, de naphtol AS, de benzimidazolone, de disazocondensation, de type complexe métallique-azoïque ou un pigment polycyclique du groupe des pigments de phtalocyanine, de quinacridone, de pérylène, de périnone, de thioindigo, d'anthanthrone, d'anthraquinone, de flavanthrone, d'indanthrone, d'isoviolanthrone, de pyranthrone, de dioxazine, de quinophtalone, d'isoindolinone, d'isoindoline et de dicétopyrrolopyrrole ou une suie.

7. Utilisation selon au moins l'une quelconque des revendications précédentes, **caractérisée en ce que** les motifs structuraux (I) et (II) du composant (B) sont des produits de transformation de polyols dotés d'une hydricité de trois ou plus, de préférence le diglycérol, l'érythritol, le glycérol, le pentaérythritol, les polyglycérols, le sorbitol, le triméthylolpropane ou le xylitol.

8. Utilisation selon au moins l'une quelconque des revendications précédentes, **caractérisée en ce que** la préparation de pigment possède une viscosité inférieure à 10,0 Pa*s à une vitesse de cisaillement de 5 s⁻¹.

9. Utilisation selon au moins l'une quelconque des revendications précédentes, **caractérisée en ce que** la préparation de pigment possède une valeur de pH dans la plage de 4 à 14.

10. Utilisation selon au moins l'une quelconque des revendications précédentes, **caractérisée en ce que** le matériau naturel ou synthétique est un enduit ou un béton.
